# EUROPEAN PATENT SPECIFICATION

(11) **EP 1 274 790 B1**
(45) Date of publication and mention of the grant of the patent: **22.09.2004**
(21) Application number: 01927949.6
(22) Date of filing: 09.04.2001
(51) Int. Cl.: C08L 23/04, B65D 81/30, B32B 27/32

(54) **POLYMER-BASED COMPOSITION**
POLYMERZUSAMMENSETZUNG
COMPOSITION BASE DE POLYM RE

(30) Priority: 10.04.2000 FI 20000846
(43) Date of publication of application: 15.01.2003
(73) Proprietor: Borealis Technology Oy, 06101 Porvoo (FI)
(72) Inventor: LAIHO, Erkki, FIN-06450 Porvoo (FI); SAINIO, Markku, FIN-06100 Porvoo (FI); VÄHÄLÄ, Martti, FIN-06400 Porvoo (FI)
(74) Representative: Saijonmaa, Olli-Pekka
(86) International application number: PCT/FI2001/000345
(87) International publication number: WO 2001/077215

(56) References cited:
- WO-A-98/30628
- WO-A-99/61245
- US-A- 4 147 291
- US-A- 4 258 848
- DATABASE WPI Section Ch, Week 199424 Derwent Publications Ltd., London, GB; Class A17, AN 1994-196825 XP002901875 & JP 06 135439 A (DAINIPPON PRINTING CO LTD), 17 May 1994 (1994-05-17)

## Description

The invention relates to a polymer-based composition, which is intended to be used especially as an extrudable or coextrudable film or film coating for a substrate in web form, such as packaging cardboard. As the principal component such a composition contains at least one extrudable or coextrudable polymer.

Polymers have been used as single- or multi-layer coatings in packaging papers and packaging cardboards, provided either on one side or on both sides of paper or cardboard. It has been required that a heat-sealable polymer coating be provided especially for packages to be closed by heat sealing, such as packaging materials for food packages. Respectively, polymers have been extruded as single- or multi-layer polymeric packaging films, from which heat-sealability can be required.

Packaging cardboard used for food packages, such as milk and juice cartons, has traditionally also been provided with an aluminium foil for making the package gas and aroma proof, which has essentially improved the durability of the product. The aluminium foil also protects the product from the possible detrimental effects of ultraviolet radiation or visible light. For cost and environmental reasons, however, aluminium has been replaced to an increasing extent by polymers acting as oxygen and aroma barriers, such as ethylene vinyl alcohol copolymer (EVOH) or polyamide (PA) in the present packaging cardboards. However, these do not form any UV or light protection, due to which visible light and ultraviolet radiation have the chance to penetrate through the material to harm the packed product.

It has been tried to prevent the ultraviolet radiation from penetrating through the packaging material into the packed product by using UV absorbers incorporated into the material or by printing the material. Mentions of, for example, glimmer added to the polymeric gas barrier layer of packaging cardboard (patent FI-96752), or of the reducing effect a dye pigment has on UV permeability (application FI-980086), are found in literature.

Also the development trend that packaging cardboards be made thinner than before has increased the transmission of visible light and ultraviolet radiation. This problem is emphasised in cardboards manufactured of bleached pulp, from which the light and UV protection caused by chromophores in the pulp is missing. For example, it has been noted that a typical polymer-coated multi-layer packaging cardboard, in which the weight of the bleached base cardboard is 240 kg/m², can let through almost 10% of the visible light coming across it in the wavelength range of 400 - 700 nm and that this light can harmfully effect the durability and quality of the packed food. The measurements conducted show that the light penetrating the packaging material disintegrates ascorbic acid in the juice, thus reducing its amount from about a third of the original during a storage time of five weeks. In an otherwise similar storing test, in which the effect of light had been eliminated, about 75% of the ascorbic acid remained after the completion of the test.

The above mentioned surprising observations form the basis for the present invention, with which the said detrimental problem of transmission of light and UV radiation in the packaging material can be eliminated. According to the invention, the solution is a polymer-based composition, which is especially suitable for an extrudable or coextrudable film or coating; the composition is characterised in that it contains a polymer, the melt viscosity (MFR₂) of which is 0.5 - 20 g/10 min., and that 0.05 - 0.5% of black pigment and 5 - 25% of white pigment has been blended into the polymer, with which the composition has been tinted grey and made to absorb light and UV radiation.

The absorption properties of the composition of the invention are principally based on the existence of the absorbing black pigment. Especially efficient black pigment is carbon black, which provides the desired light and UV protection already in low concentrations and which, being non-toxic and enduring heat-sealing, is suitable for the coating composition intended for food packages.

The said white pigment to be incorporated into the composition, most preferably titanium dioxide, does not in itself very much reduce the penetration of light or UV radiation of the film or coating, but its main significance is that it, together with the black pigment, provides the composition with a grey tint. By pigmenting the composition grey, the appearance of the film or coating formed from it is made to resemble the aluminium foil traditionally used in packaging materials. As consumers have grown accustomed to the aluminium foils, which have been used for a long time, it is a very considerable advantage for getting the material approved in the markets, if its appearance resembles that of the accustomed one. The corresponding appearance could not be achieved with mere black pigment, and the said essential advantage would thus remain unachieved.

It is required from the composition of the invention for packaging materials that, in extruded or coextruded layer weight of 5 - 60g/m², especially in heat-sealing layers preferably 20 - 50g/m², it forms a grey protective coating layer with which the desired light and UV absorption can be achieved.

The polymer component of the invention, forming the principal component of the composition, is preferably polyolefin, such as low-density polyethylene (PE-LD), which has the required melt viscosity of 0.5 - 20g/10 min.

The optional additional component in compositions of the invention is molecular sieve, such as sodium aluminium silicate, the purpose of which is to act as the absorber of possible smells.

The weight limits for the said components in the composition of the invention are preferably 75 - 95% of polymer, 5 - 25% of white pigment, 0.05 - 0.5% of black pigment, and 0 - 0.05% of molecular sieve.

The polymer component of the composition may be low-density polyethylene, the amount of which in the composition is 75 - 95%, preferably 80 - 90%, and most preferably 85 - 90%. The white pigment is most preferably titanium dioxide, the amount of which in the composition is 5 - 25%, preferably 10 - 20%, and most preferably 10 - 15%. The black pigment is most preferably carbon black, the amount of which in the composition is 0.05 - 0.5%, preferably 0.10 - 0.30%, and most preferably 0.10 - 0.20%. The molecular sieve possibly incorporated into the composition is most preferably sodium aluminium silicate, the amount of which in the composition is at most 0.5%, preferably 0:10 - 0.30%, and most preferably 0.15 - 0.25%. A composition of the invention comprising about 88% of low-density polyethylene, about 12% of titanium dioxide, about 0.15% of carbon black, and about 0.2% of sodium aluminium silicate, has been found as especially advantageous.

The density of the low-density polyethylene used in the composition may be 912 - 935 kg/m³, preferably 915 - 932 kg/m³, and most preferably 915 - 930 kg/m³. According to the invention, the melt viscosity of polyethylene is 0.5 - 20 g/10 min., preferably 1 - 15 g/10 min., and most preferably 3 - 10 g/10 min. Especially advantageous is a low-density polyethylene manufactured by high-pressure free radical polymerisation, which is rich in long side chains and a high melt strength, and because of that a good processability. A possible choice may also be a linear low-density polyethylene manufactured by catalytic copolymerisation of ethylene and higher α-olefin, or by using chrome, Ziegler Natta, or metallocene catalyst.

Long side chains may be provided by using diene or polyene containing two end double bonds as comonomer.

Alternatively, polyethylene manufactured with Borstar technology can be used in the composition, the polyolefin of which is polyethylene manufactured with Borstar technology, the density of which is 927 - 962 kg/m³, preferably 945 - 960 kg/m³, and the melt viscosity 0.5 - 20 g/10 min., preferably 1 - 15 g/10 min., and most preferably 3 - 10 g/10 min. Considering the Borstar technology, reference is made to the application FI-970121, which with this reference is attached as part of the present specification.

When incorporating about 0.10% of carbon black into the composition, a sufficient light and UV protection is generally achieved in practice, and about 0.20% is a limit, the exceeding of which is no longer necessary, taking into consideration the said protection. However, the said limit can be exceeded when looking for a desired grey shade for the composition. With a carbon black concentration of over 0.5%, the colour of the composition becomes so dark that it no longer resembles aluminium. For achieving the best light and UV protection, the carbon black has to be added into the composition in as small particles as possible. The average particle size is preferably at most 200 nm and most preferably about 20 nm.

As high purity as possible is required from the titanium dioxide used for the composition, and it has to have been processed organically or inorganically as little as possible. Impurities might react at extrusion temperatures and thus decrease the quality of the polymer. The amount of titanium dioxide to be incorporated into the composition depends on the amount of carbon black added; their mutual relation determines the grey tint of the composition. The upper limit, 25%, for the titanium dioxide concentration is in practice set by the fact that the extrudability of the composition begins to decrease above this limit. At the lower limit of 5%, the amount of carbon black producing the suitable grey again falls so low that the light and UV protection start to suffer. The average size of the titanium dioxide particles is preferably at most 1.8 µm and most preferably about 0.18 µm.

Among others, sodium aluminium silicate marketed by UOP with the product name Abscent 3000 is suitable as molecular sieve.

The manufacture of the composition of the invention is best conducted by adding the pigments into the polymer as premixtures (Masterbatch). Such products suitable for the invention are, for example, a titanium dioxide mixture marketed with the name Premix Prewhite 18-50, and a carbon black mixture marketed with the name Premix Preblack 710-03.

The invention also relates to the use of the polymer-based composition tinted grey with pigments as a coating to be spread on packaging cardboard as a coating which provides a protection against light and UV radiation, and which has an appearance imitating an aluminium foil.

For testing the invention, a composition was manufactured, in which 0.12% of carbon black and 7.5% of titanium dioxide were blended into low-density polyethylene. Onto packaging cardboard manufactured of bleached pulp and weighing 240 g/m², 5g/m² of sealing polymer (EVOH), and 6 g/m² of polymeric binding agent were spread as coatings, and the topmost heat sealing layer was formed from 45 g/m² of the said composition tinted grey according to the invention. A similarly manufactured polymer-coated packaging cardboard was used as reference material, but it did not contain the dye pigments added into the topmost heat sealing layer. Apple juice was stored in closed cartons heat-sealed of packaging cardboard at storage temperatures of 23°C and 9°C. The ascorbic acid concentration was measured from the juices at the moment of packing and after storage times of two and five weeks. The results have been gathered to the following table.

**Table**

| The change in the ascorbic acid concentration (mg/l) in apple juice | | | |
|---|---|---|---|
| **Storage time** | **0** | **2 weeks** | **4 weeks** |
| Invention 9°C | 450 | 395 | 355 |
| Invention 23°C | 450 | 355 | 340 |
| Reference 9°C | 450 | 375 | 155 |
| Reference 23°C | 450 | 275 | 145 |

The considerable improvement in the preservation of ascorbic acid in packed juice to be achieved with the invention can be seen from the results.

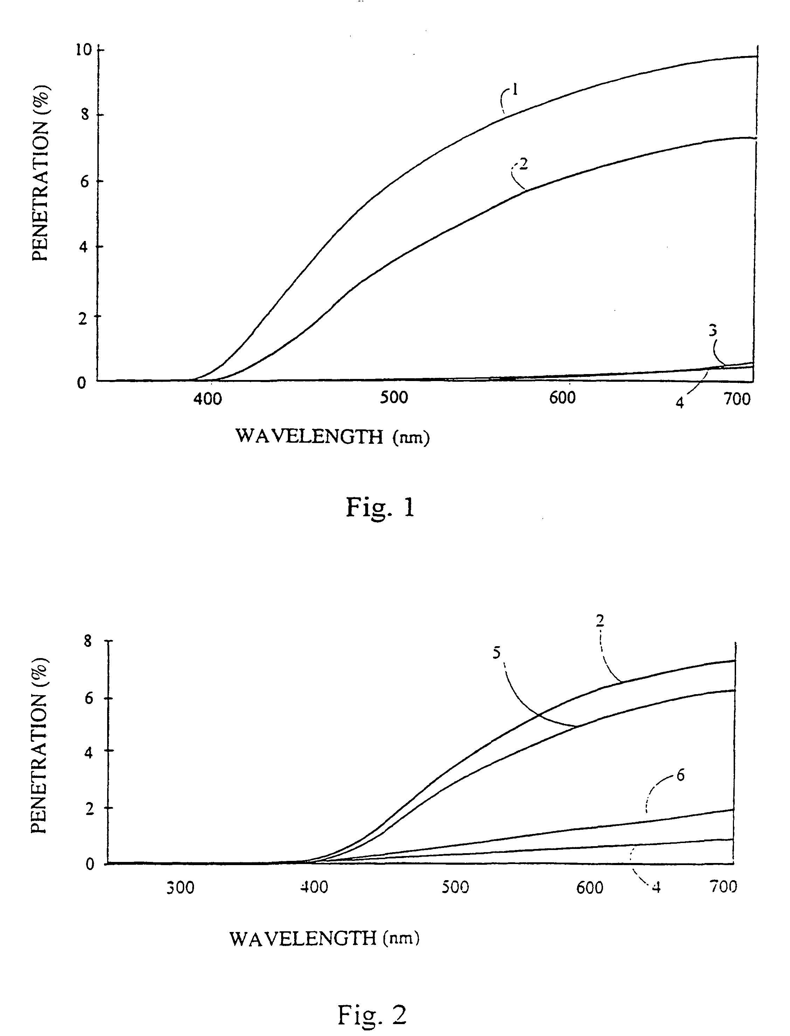

The effect of the pigments incorporated into the coating composition in accordance with the invention on the light transmission in the wavelength range of visible light was tested in tests, the curves measured in which are shown in the enclosed Figures 1 and 2. The objective of the measuring comprised multi-layer packaging materials, which contained the coating composition of the invention, and the reference products were known state-of-the-art multi-layer packaging materials.

In Figure 1, the curve 1 has been obtained from cardboard of bleached pulp, the weight of which was 240 g/m², and which had as coating 20 g/m² of clear unpigmented polyethylene (PE-LD); the curve 2 has been obtained from similarly coated cardboard of bleached pulp, the weight of which was 300 g/m²; the curve 3 has been obtained from similarly coated cardboard of unbleached pulp, with a weight of 239 g/m²; and the curve 4 illustrating the invention has been obtained from cardboard of bleached pulp, with a weight of 240 g/m² and with a coating comprising 20 g/m² of polyethylene composition (PE-LD) of the invention tinted grey by blending into it 0.12% of carbon black and 7.5% of titanium dioxide.

By comparing the curves 1 and 2 in Figure 1, the increase in light transmission caused by the thinning of the cardboard manufactured of bleached pulp can be observed. The curve 3 further shows that, as the cardboard is made of unbleached pulp, no essential light transmission problem occurs. The substantially corresponding light permeability according to Figure 4 has been achieved by coating the cardboard with a polymer composition of the invention, tinted grey with the help of white and black pigment.

Figure 2 comprises light transmission curves measured as in Fig. 1, illustrating the effect of the amount of titanium dioxide and carbon black on the absorption of light. The curve 2 representing the state of the art and the curve 4 representing the invention are identical to those in Fig. 1. The curve 5 has been obtained from cardboard of bleached pulp, with a weight of 300 g/m² and coated with 20 g/m² of polyethylene (PE-LD), containing 7.5% of titanium dioxide. The curve 6 has been obtained from the same base cardboard, the coating of which comprised 17 g/m² of the said polyethylene dyed white and 3 g/m² of the said polyethylene tinted grey blended with it. By comparing the curves in Fig. 2 it can be noted that the reducing effect of titanium dioxide on the light permeability is relatively small, but already in a concentration of 0.018%, the carbon black reduces the light penetrating the material to less than a third of the level it would be without the adding of pigment.

It is obvious for one skilled in the art that the different forms of embodiment are not restricted to the above examples, but they may vary within the enclosed claims.

## Claims

1. The use of a polymer-based composition, the composition containing a polymer, the melt viscosity (MFR₂) of which is 0.5 - 20 g/10 min., and the composition incorporating 0.05 - 0.5% of black and 5 - 25% of white pigment to tint the composition grey and to make it absorb visible light and UV radiation, as a heat-sealable coating to be spread onto a packaging cardboard, providing a protection from light and UV radiation, its appearance imitating an aluminium foil.

2. Use according to claim 1, **characterised in that** the black pigment is carbon black.

3. Use according to claim 1 or 2, **characterised in that** the white pigment is titanium dioxide.

4. Use according to one of the preceding claims, **characterised in that** the composition is extruded or coextruded as a grey polymer coating layer providing light protection and UV protection, the weight of the layer being 5 - 60 g/m², preferably 20 - 50 g/m².

5. Use according to one of the preceding claims, **characterised in that** the composition further includes molecular sieve, such as sodium aluminium silicate.

6. Use according to one of the preceding claims, **characterised in that** the composition contains polyolefin as polymer.

7. Use according to claim 6, **characterised in that** the polyolefin is low-density polyethylene, the density of which is 912 - 935 kg/m³, preferably 915 - 932 kg/m³, and most preferably 915 - 930 kg/m³, and the melt viscosity 0.5 - 20 g/10 min., preferably 1 - 15 g/10 min., and most preferably 3 - 10 g/10 min.

8. Use according to one of the preceding claims, **characterised in that** the composition contains
- 75 - 95% of polymer, such as polyethylene;
- 5 - 25% of white pigment, such as titanium dioxide;
- 0.05 - 0.5% of black pigment, such as carbon black; and
- 0 - 0.5% of molecular sieve, such as sodium aluminium silicate.

9. Use according to claim 8, **characterised in that** the composition contains 80 - 90%, most preferably 85 - 90% of low-density polyethylene.

10. Use according to claim 8 or 9, **characterised in that** the composition contains 10 - 20%, most preferably 10 - 15% of titanium dioxide.

11. Use according to one of the claims 8 - 10, **characterised in that** the composition contains 0.10 - 0.30%, most preferably 0.10 - 0.20% of carbon black.

12. Use according to one of the claims 8 - 11, **characterised in that** the composition contains 0.10 - 0.30%, most preferably 0.15 - 0.25% of sodium aluminium silicate.

13. Use according to claims 9 - 12, **characterised in that** the composition contains
- about 88% of low-density polyethylene;
- about 12% of titanium dioxide;
- about 0.15% of carbon black; and
- about 0.2% of sodium aluminium silicate.

## Patentansprüche

1. Verwendung einer Polymerzusammensetzung, wobei die Zusammensetzung ein Polymer enthält, dessen Schmelzviskosität (MFI₂-Index) 0,5-20 g/10 min beträgt und wobei die Zusammensetzung 0,05-0,5% schwarzes Pigment und 5-25% weißes Pigment enthält, um die Zusammensetzung grau zu tönen und um sie sichtbares Licht und UV-Strahlung absorbierend zu machen, als heißsiegelbare Beschichtung, die zum Auftragen auf einen Verpackungskarton vorgesehen ist,: zur Bereitstellung eines Schutzes gegen Licht und UV-Strahlung, wobei ihr Aussehen eine Aluminiumfolie imitiert.

2. Verwendung nach Anspruch 1, **dadurch gekennzeichnet, daß** das schwarze Pigment Farbruß ist.

3. Verwendung nach Anspruch 1 oder 2, **dadurch gekennzeichnet, daß** das weiße Pigment Titandioxid ist.

4. Verwendung nach einem der vorhergehenden Ansprüche, **dadurch gekennzeichnet, daß** die Zusammensetzung als graue Polymerbeschichtung extrudiert oder koextrudiert wird, wobei ein Lichtschutz und ein UV-Schutz erzielt wird und das Gewicht der Schicht 5-60 g/m², bevorzugt 20-50 g/m² beträgt.

5. Verwendung nach einem der vorhergehenden Ansprüche, **dadurch gekennzeichnet, daß** die Zusammensetzung ferner ein Molekularsieb wie Natriumalumosilicat enthält.

6. Verwendung nach einem der vorhergehenden Ansprüche, **dadurch gekennzeichnet, daß** die Zusammensetzung als Polymer Polyolefin enthält.

7. Verwendung nach Anspruch 6, **dadurch gekennzeichnet, daß** das Polyolefin ein Polyäthylen mit niedriger Dichte ist, dessen Dichte 912-935 kg/m³, bevorzugt 915-932 kg/m³ und besonders bevorzugt 915-930 kg/m³ beträgt, und wobei die Schmelzviskosität 0,5-20 g/10 min, bevorzugt 1-15 g/10 min und besonders bevorzugt 3-10 g/10 min beträgt.

8. Verwendung nach einem der vorhergehenden Ansprüche, **dadurch gekennzeichnet, daß** die Zusammensetzung umfaßt:
- 75-95% Polymer wie Polyäthylen;
- 5-25% weißes Pigment wie Titandioxid;
- 0,05-05% schwarzes Pigment wie Farbruß; und
- 0-0,5% Molekularsieb wie Natriumalumosilicat.

9. Verwendung nach Anspruch 8, **dadurch gekennzeichnet, daß** die Zusammensetzung 80-90%, besonders bevorzugt 85-90% eines Polyäthylens mit niedriger Dichte enthält.

10. Verwendung nach Anspruch 8 oder 9, **dadurch gekennzeichnet, daß** die Zusammensetzung 10-20%, besonders bevorzugt 10-15% Titandioxid enthält.

11. Verwendung nach einem der Ansprüche 8 bis 10, **dadurch gekennzeichnet, daß** die Zusammensetzung 0,10-0,30%, besonders bevorzugt 0,10-0,20% Farbruß enthält.

12. Verwendung nach einem der Ansprüche 8 bis 11, **dadurch gekennzeichnet, daß** die Zusammensetzung 0,10-0,30%, besonders bevorzugt 0,15-0,25% Natriumalumosilicat enthält.

13. Verwendung nach den Ansprüchen 9 bis 12, **dadurch gekennzeichnet, daß** die Zusammensetzung enthält:
- ungefähr 88% eines Polyäthylens mit niedriger Dichte;
- ungefähr 12% Titandioxid;
- ungefähr 0,15% Farbruß; und
- ungefähr 0,2% Natriumalumosilicat.

## Revendications

1. Utilisation d'une composition à base de polymère, la composition contenant un polymère, dont la viscosité à l'état fondu (MFR₂) est égale à 0,5 - 20 g/10 min, et la composition renfermant 0,05 - 0,5 % de pigment noir et 5 - 25 % de pigment blanc pour teinter la composition en gris et la faire absorber la lumière visible et le rayonnement des UV, comme revêtement thermocollable (ou thermosoudable) destiné à être appliqué sur un carton d'emballage, en fournissant une protection contre la lumière visible et les radiations UV, son aspect imitant une feuille en aluminium.

2. Utilisation selon la revendication 1, **caractérisée en ce que** le pigment noir est du noir de carbone.

3. Utilisation selon la revendication 1 ou 2, **caractérisée en ce que** le pigment blanc est du dioxyde de titane.

4. Utilisation selon l'une quelconque des revendications précédentes, **caractérisée en ce que** la composition est extrudée ou coextrudée sous la forme d'une couche de revêtement constituée d'un polymère de couleur grise fournissant une protection contre la lumière et une protection contre les UV, le poids de la couche étant égal à 5 - 60 g/m², de préférence à 20 - 50 g/m².

5. Utilisation selon l'une quelconque des revendications précédentes, **caractérisée en ce que** la composition comprend en outre un tamis moléculaire, tel que du silicate de sodium et d'aluminium.

6. Utilisation selon l'une quelconque des revendications précédentes, **caractérisée en ce que** la composition contient une polyoléfine comme polymère.

7. Utilisation selon la revendication 6, **caractérisée en ce que** la polyoléfine est un polyéthylène de basse densité, dont la densité est égale à 912 - 935 kg/m³, de préférence à 915 - 932 kg/m³, et de manière préférée entre toutes à 915 - 930 kg/m³, et dont la viscosité à l'état fondu est égale à 0,5 - 20 g/10 min, de préférence à 1 - 15 g/10 min, et de manière préférée entre toutes à 3 - 10 g/ 10 min.

8. Utilisation selon l'une quelconque des revendications précédentes, **caractérisée en ce que** la composition contient
- 75 - 95 % de polymère, tel que du polyéthylène ;
- 5 - 25 % de pigment blanc, tel que du dioxyde de titane ;
- 0,05 - 0,5 % de pigment noir, tel que du noir de carbone ; et
- 0 - 0,5 % de tamis moléculaire, tel que du silicate de sodium et d'aluminium.

9. Utilisation selon la revendication 8, **caractérisée en ce que** la composition contient 80 - 90 %, de manière préférée entre toutes 85 - 90 % de polyéthylène de basse densité.

10. Utilisation selon la revendication 8 ou 9, **caractérisée en ce que** la composition contient 10 - 20 %, de manière préférée entre toutes 10 - 15 % de dioxyde de titane.

11. Utilisation selon l'une des revendications 8 - 10, **caractérisée en ce que** la composition contient 0,10 - 0,30 %, de manière préférée entre toutes 0,10 - 0,20 % de noir de carbone.

12. Utilisation selon l'une des revendications 8 - 11, **caractérisée en ce que** la composition contient 0,10 - 0,30 %, de manière préférée entre toutes 0,15 - 0,25 % de silicate de sodium et d'aluminium.

13. Utilisation selon les revendications 9 - 12, **caractérisée en ce que** la composition contient
- environ 88 % de polyéthylène de basse densité ;
- environ 12 % de dioxyde de titane ;
- environ 0,15 % de noir de carbone ; et
- environ 0,2 % de silicate de sodium et d'aluminium.
